# EUROPÄISCHE PATENTSCHRIFT

(11) **EP 4 659 832 B1**
(45) Veröffentlichungstag und Bekanntmachung des Hinweises auf die Patenterteilung: **20.05.2026**
(21) Anmeldenummer: 25177568.0
(22) Anmeldetag: 20.05.2025
(51) Int. Cl.: B01D 19/00

(54) **GASABSCHEIDUNGSVORRICHTUNG UND VERSORGUNGSSYSTEM**
GAS SEPARATION DEVICE AND SUPPLY SYSTEM
DISPOSITIF DE SÉPARATION DE GAZ ET SYSTÈME D'ALIMENTATION

(30) Priorität: 05.06.2024 DE 102024115654
(43) Veröffentlichungstag der Anmeldung: 10.12.2025
(73) Patentinhaber: Viessmann Holding International GmbH, 35108 Allendorf (Eder) (DE)
(72) Erfinder: GRÜN, Julian, 35066 Frankenberg (DE); VAUPEL, Manfred, 35066 Frankenberg (DE)
(74) Vertreter: MERH-IP Matias Erny Reichl Hoffmann Patentanwälte PartG mbB

(56) Entgegenhaltungen:
- EP-A1- 0 720 861
- CN-B- 102 225 252
- CN-B- 112 691 446
- CN-U- 204 709 874
- US-A- 4 475 932
- US-B2- 11 906 340
- US-B2- 8 308 856

## Beschreibung

### Technisches Gebiet

Die vorliegende Erfindung betrifft ein Versorgungssystem zur Versorgung von ein oder mehreren Verbrauchern mit einem temperierten Medium.

### Hintergrund der Erfindung

Aus dem Stand der Technik sind Versorgungssysteme bekannt, in denen Wärme ein darin strömendes, temperiertes Medium zu verschiedenen Verbrauchern in einem Gebäude transportiert wird. Hierzu zählen beispielsweise Brauchwassersysteme zur Versorgung mit temperiertem Brauchwasser oder aber auch Klimatisierungssysteme, über die Wärme- und/oder Kälteenergie zu Wärmeübertragern geführt wird, um über diesen beispielsweise einen Raum eines Gebäudes zu heizen und/oder zu kühlen. Als Beispiel sei hierzu eine hinlänglich bekannte Heizungsanlage genannt, die ein temperiertes Medium, üblicherweise Wasser, über ein Leitungssystem zu als Radiatoren oder als Fußbodenheizung ausgeführten Wärmeübertragern in einem Raum transportiert.

Derartige Versorgungssysteme umfassen üblicherweise Gasabscheidungsvorrichtungen, über die im Leitungssystem enthaltenes Gas aus dem selbigen abgeführt werden kann. Dies erhöht nicht nur den Wirkungsgrad beim Energietransport, sondern kann unter Umständen auch sicherheitsrelevant sein.

Letzteres ist insbesondere dann der Fall, wenn das Risiko besteht, dass das Medium im Leitungssystem durch ein Arbeitsmedium anderer Anlagen kontaminiert wird; so z. B. durch Kohlenwasserstoffe aus einem Kältekreislauf, der über einen Wärmeübertrager (z. B. Verdampfer oder Verflüssiger) mit dem Versorgungssystem gekoppelt ist. Ein Abscheiden eines solchen Gases gewährleistet die Sicherheit bei der Verwendung des Versorgungssystems und verringert auch das Risiko einer Beschädigung von Komponenten des Versorgungssystems.

So ist aus der DE 10 2020 103 743 A1 ein Versorgungssystem bekannt, das als Sicherungskomponenten ein Rückschlagventil und eine Gasabscheidungsvorrichtung umfasst, wobei über Letztere im Versorgungssystem zusammen mit dem Medium strömendes Gas entfernt werden kann. Die Gasabscheidungsvorrichtung der DE 10 2020 103 743 A1 weist dabei einen großen, vertikal ausgerichteten Gehäusekörper mit einem Zulauf und einem Ablauf auf, wobei sich unter Ausnutzung der Schwerkraft das leichtere Gas in einem oberen Sammelbereich einer Hauptkammer sammelt und dort über ein Ablassventil abgeführt werden kann. Der große Gehäusekörper sorgt dafür, dass eine Strömungsgeschwindigkeit reduziert wird, um zum einen ein Mitreißen des Gases zu unterbinden und zum anderen genügend Zeit für die Schwerkraft-basierte Abscheidung des Gases zur Verfügung zu haben.

Eine derartige Ausführung einer Gasabscheidungsvorrichtung benötigt einen vergleichsweise großen Bauraum. Zudem verschlechtert sich die Abscheidungsrate erheblich, wenn es zu einem Anstieg der Strömungsgeschwindigkeit im Versorgungssystem kommt, beispielsweise um einen höheren Bedarf an temperiertem Medium an den Verbrauchern zu decken.

Weiter ist aus der US 4 475 932 A ein Heizsystem bekannt, das eine Gasabscheidungsvorrichtung zum Abscheiden von Luft aus dem in einem Leitungsnetzwerk zirkulierenden Heizungswasser aufweist. Die Gasabscheidungsvorrichtung separiert dabei Luft und Heizungswasser unter Ausnutzung von Zentrifugalkräften, in dem die Mischung aus Luft und Heizungswasser derart in eine Hauptkammer eingeleitet wird, dass die Mischung in der Hauptkammer rotiert und die sich in der Mitte sammelnde Luft nach oben aus der Hauptkammer abgeführt wird.

Weiterer Stand der Technik im Bereich von Gasabscheidungsvorrichtungen ist zudem aus der CN 204 709 874 U, der CN 102 225 252 B, der US 8 308 856 B2, der EP 0 720 861 A1, der US 11 906 340 B2 und der CN 112 691 446 B bekannt.

### Zusammenfassung

Eine Aufgabe der vorliegenden Erfindung ist es daher, ein Versorgungssystem zu schaffen, das eine gegenüber dem Stand der Technik effizientere Möglichkeit zur Gasabscheidung bereitstellt, die insbesondere eine zuverlässige Abscheidung für verschiedene Strömungsgeschwindigkeiten gestattet, und die zudem wenig Bauraum in Anspruch nimmt.

Zur Lösung dieser Aufgabe wird ein Versorgungssystem nach Anspruch 1 bereitgestellt.

Die jeweiligen abhängigen Ansprüche beziehen sich auf bevorzugte Ausführungsformen, die jeweils für sich oder in Kombination bereitgestellt werden können.

Gemäß einem ersten Aspekt der Erfindung wird ein Versorgungssystem zur Versorgung eines oder mehrerer Verbraucher mit einem temperierten Medium bereitgestellt, das zumindest ein Leitungssystem zum Transport des Mediums, einen Wärmeübertrager, der insbesondere Teil eines Kältekreislaufs, der ein Kältemittel führt, ist, und der eingerichtet ist, das im Leitungssystem strömende Medium zu temperieren, und eine Gasabscheidungsvorrichtung umfasst, die zum Abscheiden von Gas aus dem Leitungssystem eingerichtet ist, und deren Zulauf vorzugsweise an einen Ablauf des Wärmeübertragers angeschlossen ist.

Die Gasabscheidungsvorrichtung umfasst einen Gehäusekörper, der wiederum einen Zulauf, eine Hauptkammer und einen Ablauf umfasst, die Teil eines Strömungspfads für ein den Gehäusekörper durchströmenden Fluids aus dem Leitungssystem sind. Der Gehäusekörper weist in einem Übergangsbereich zwischen dem Zulauf und der Hauptkammer einen Separationsabschnitt auf, der bogenförmig ausgestaltet ist, derart, dass der Strömungspfad ausgehend von einer Einströmrichtung des Zulaufs in einem Bogen in die Hauptkammer eintritt, um unter Ausnutzung von auf das strömende Fluid wirkenden Zentrifugalkräften gasförmige und flüssige Bestandeile des Fluids vor einem Eintritt in die Hauptkammer zumindest teilweise voneinander zu trennen.

Die Gasabscheidungsvorrichtung umfasst weiterhin eine innerhalb des Gehäusekörpers gelagerte Verschlussvorrichtung, die eingerichtet ist, in Abhängigkeit einer in der Hauptkammer gesammelten Gasmenge den Ablauf zu verschließen und so eine Strömung des Fluids entlang des Strömungspfads zu unterbinden.

Durch das Durchströmen des bogenförmigen Separationsabschnitts bewirken die durch die Bewegung des Fluids entlang des Bogens bedingten Zentrifugalkräfte einen Querströmungseffekt, in Folge dessen die dichteren flüssigen Bestandteile des Fluids bezogen auf den Bogen in einen radial äußeren Bereich des Fluidkanals im Separationsabschnitt gedrückt werden und sich entsprechend die weniger dichten gasförmigen Bestandteile in einem radial inneren Bereich des Fluidkanals im Separationsabschnitt sammeln.

Somit liegen am stromabwärtsseitigen Ende des Separationsabschnitts im Grunde zwei Strömungsbereiche vor, ein radial innenliegender erster Strömungsbereich und ein radial außenliegender zweiter Strömungsbereich, wobei ein Gasanteil des Fluids im ersten Strömungsbereich größer ist als im zweiten Strömungsbereich.

Auf diese Weise kann bereits vor Eintritt in die Hauptkammer, die vorzugsweise eine größere Strömungsquerschnittsfläche aufweist als der Zulauf und/oder der Separationsabschnitt, eine Vor-Separation der gasförmigen und flüssigen Bestandteile erfolgen.

Dadurch kann die Hauptkammer, in der die "Haupt-Separation" und ein Sammeln des abgeschiedenen Gases erfolgt, besonders kompakt ausgeführt werden, da bereits ein zumindest teilweise vorsepariertes Gemisch in diese eintritt.

Auf diese Weise kann wertvoller Bauraum eingespart werden.

Mit zunehmender Strömungsgeschwindigkeit im Zulauf steigen auch die zu deren Quadrat proportionalen Zentrifugalkräfte an, sodass der vorstehend beschriebene Vor-Separationseffekt mit steigender Strömungsgeschwindigkeit verstärkt wird. Damit kann die Hauptkammer in ihren Ausmaßen auch bei höheren Strömungsgeschwindigkeiten im Zulauf kompakt gehalten werden, da ein solcher Fall nicht länger durch einen vergleichsweise starken Anstieg der Strömungsquerschnittsfläche der Hauptkammer im Vergleich zu der des Zulaufs kompensiert werden muss.

Im Ergebnis wird durch die bereitgestellte Gasabscheidungsvorrichtung eine zuverlässige Abscheidung für verschiedene Strömungsgeschwindigkeiten gestattet, die zudem wenig Bauraum in Anspruch nimmt.

Der bogenförmige Separationsabschnitt ist vorzugsweise durchgängig gebogen, weist also keine geraden Abschnitte auf. Die Position des Separationsabschnitts im Übergang ist vorzugsweise so zu verstehen, dass der Separationsabschnitt unmittelbar an die Hauptkammer angrenzt und beispielsweise keine geraden Abschnitt mehr zwischen diesem und der Hauptkammer vorgesehen sind.

Der bogenförmige Separationsabschnitt kann als Teil des Zulaufs oder als Teil der Hauptkammer ausgeführt sein oder auch aus einem ersten Abschnitt, der Teil des Zulaufs ist, und einem zweiten Abschnitt, der Teil der Hauptkammer ist, gebildet sein.

Der Separationsabschnitt weist zumindest in einem Anfangsbereich im Wesentlichen die gleiche Strömungsquerschnittsfläche wie der Zulauf auf, sodass sich die Strömungsquerschnitt beim Eintritt in den Separationsabschnitt nicht zu stark reduziert, was die Zentrifugalkräfte reduzieren würde. Im Wesentlichen gleich ist hierbei so zu verstehen, dass sich die jeweiligen Strömungsquerschnittsflächen um nicht mehr als 50%, vorzugsweise um nicht mehr als 25%, voneinander unterscheiden.

Eine Bogenform des Separationsabschnitts ist auf keine spezielle Form beschränkt und kann durch jedwede gebogene oder gekrümmte Kontur beschrieben werden, beispielsweise durch einen Kreisbogen, einen Parabelbogen, oder einen elliptischen Bogen.

Als Strömungspfad ist dabei ein die Strömung durch den Gehäusekörper beschreibender Pfad zu verstehen, bei dem es sich beispielsweise um eine die Mittelpunkte der Strömungsquerschnitte verbindende Mittellinie handeln kann oder aber auch um eine beliebige Strömungslinie oder ein Zusammenschluss mehrere Strömungslinien.

Strömungsquerschnitte sind dabei im Sinne der Strömungsmechanik Querschnitte, die orthogonal zu einer Hauptströmungsrichtung entlang des Strömungspfads stehen.

Die Hauptkammer weist vorzugsweise einen Sammelbereich auf, in dem das von den flüssigen Bestandteilen des Fluids getrennte Gas gesammelt wird, um später aus dem hydraulischen System abgeführt zu werden. In anderen Worten handelt es sich bei der Hauptkammer vorzugsweise um den Teil des Gehäusekörpers, der den Sammelbereich für das Gas umfasst.

Die Hauptkammer weist vorzugsweise zumindest im Mittel eine größere Strömungsquerschnittsfläche auf als der Zulauf, sodass dort eine Strömungsgeschwindigkeit reduziert wird, um die Trennung der flüssigen und gasförmigen Bestandteile zu begünstigen und ausreichend Zeit für einen Transport der gasförmigen Bestandteile in den Sammelbereich zur Verfügung zu stellen.

Der Gehäusekörper kann integral ausgeführt sein, als dass dessen Komponenten stoffschlüssig miteinander verbunden sind, oder aber auch aus mehreren miteinander lösbaren Komponenten ausgebildet sein.

So können Zu- und Ablauf beispielsweise angeschraubt bzw. angeflanscht sein und auch die Hauptkammer selbst kann aus mehreren miteinander lösbar verbundenen Kammerkomponenten bestehen, um einen Zugang zum Innenraum zu erleichtern, beispielsweise zu Montage- oder Wartungszwecken.

Auch Zulauf und Ablauf können weiterhin aus mehreren lösbar verbunden Komponenten bestehen, um beispielsweise die Fertigung zu erleichtern. So kann der Zulauf beispielsweise aus einer ersten geraden Komponente und einer den Übergang zur Hauptkammer bildenden zweiten Komponente, als bogenförmigem Separationsabschnitt zusammengesetzt sein.

"Lösbar" oder "lösbar verbunden" ist hierbei stets als zerstörungsfrei lösbar zu verstehen.

Vorzugsweise ist der Separationsabschnitt als ein gebogenes Rohr bzw. als ein Rohrbogen ausgeführt, da dieser kostengünstig in der Herstellung ist. Beispielsweise kann der Separationsabschnitt als U-Rohr ausgeführt sein.

Vorzugsweise ist der Gehäusekörper aus einem Kunststoffmaterial oder aus einem Kunststoff aufweisenden Verbundmaterial hergestellt.

Vorzugsweise handelt es sich bei dem Versorgungssystem um ein Klimatisierungssystem, insbesondere eines Gebäudes, mit dem ein Zielsystem, beispielsweise ein Raum, gekühlt und/oder geheizt werden kann. Hierzu handelt es sich bei den ein oder mehreren Verbrauchern vorzugsweise um in oder an Räumen vorgesehene Wärmeübertrager, beispielsweise Radiatoren oder ein Fußbodenheizungselement.

Weiter kann es sich bei dem Versorgungssystem aber auch um ein Brauchwassersystem handeln, dass die Verbraucher, beispielsweise Wasserarmaturen, mit temperierten Wasser versorgt.

Unter Kältekreislauf soll ein Oberbegriff für Wärmepumpen oder Kältemaschinen oder Kombinationen aus diesen verstanden werden, in denen ein Kältemittel einen thermodynamischen Kreislauf durchläuft, um so Wärmeenergie zwischen einem Quellensystem in eine Zielsystem zu übertragen oder umgekehrt. Unter der Kombination sei beispielsweise eine umschaltbare Wärmepumpe zu verstehen, bei der die als Verflüssiger und Verdampfer eingesetzten Wärmeübertrager in ihrer Funktion umgeschaltet werden können, um beispielsweise im Winter ein Gebäude zu heizen und im Sonner das Gebäude kühlen zu können.

In zahlreichen Anwendungsfällen kann das im Versorgungssystem strömende Medium, üblicherweise Wasser, mit Gasen kontaminiert sein, bei denen es sich nicht nur um Luft, sondern auch um gasförmiges Kältemittel aus dem Kältekreislauf handeln kann, dass beispielsweise durch Leckage im Wärmeübertrager in das Leitungssystem des Versorgungsystems gelangen kann.

Durch den Einsatz der Gasabscheidungsvorrichtung kann beispielsweise ein Ausbreiten des gasförmigen Kältemittels im Versorgungssystem zuverlässig verhindert werden, da dieses (falls vorhanden) auf effiziente Weise aus dem Leitungssystem abgeschieden werden kann.

Vorzugsweise sind auch die bereits genannten ein oder mehreren Verbraucher Teile des Versorgungssystems.

Vorzugsweise ist die Gasabscheidungsvorrichtung bezogen auf eine Strömungsrichtung des Mediums im Versorgungssystem nach dem Wärmeübertrager angeordnet, insbesondere direkt nach dem Wärmeübertrager, und vor den ein oder mehreren Verbrauchern.

So kann besonders früh das Gas vom Ausbreiten im Versorgungssystem abgehalten werden.

Durch die Verschlussvorrichtung der Gasabscheidungsvorrichtung kann im Falle einer kritischen Menge von Gas im Leitungssystem bzw. in der Hauptkammer ein direkter Stopp der Strömung veranlasst werden, der verhindert, dass sich diese Gasmenge im Leitungssystem nach dem Ablauf ausbreitet. Eine derartige Menge wäre unter Umständen schädlich für an das Leitungssystem angeschlossene Komponenten und im Falle eines brennbaren Gases würde dies auch ein Sicherheitsrisiko darstellen.

In einer bevorzugten Ausführungsform ist der Separationsabschnitt derart ausgestaltet, dass eine Mittellinie des Separationsabschnitts, die entlang einer Fließrichtung des Fluids durch Flächenmittelpunkte von Strömungsquerschnitten des Separationsabschnitts verläuft, einen stetigen Krümmungsverlauf aufweist.

Der stetige Krümmungsverlauf begünstigt eine gleichmäßige Umlenkung einer laminaren Strömung in die Hauptkammer und reduziert das Risiko lokaler Turbulenzen, die die Vor-Separation negativ beeinträchtigen würden.

Vorzugsweise weist die Mittellinie des Separationsabschnitts entlang des Strömungspfads keinen Krümmungswechsel auf, was auch als einheitliche Krümmung bezeichnet werden kann.

Die Beschreibung über die Mittellinie bietet dabei eine einfache Möglichkeit die Bogenform des Separationsabschnitts zu beschreiben

In einer bevorzugten Ausführungsform ist der Separationsabschnitt derart ausgestaltet, dass ein Maximum des Krümmungsverlaufs der Mittellinie zwischen 1/60 mm⁻¹ und 1/20 mm⁻¹ liegt, weiter bevorzugt zwischen 1/50 mm⁻¹ und 1/35 mm⁻¹.

Vorzugsweise hat ein Strömungsquerschnitt des Separationsabschnitts dabei eine Breite oder eine Durchmesser zwischen 10 und 40 mm, bevorzugt zwischen 20 und 30 mm.

Auf diese Weise wird sichergestellt, dass der Krümmungsradius, der als Kehrwert der Krümmung an einer Stelle verstanden werden kann, nicht zu gering ausfällt. Der Krümmungsradius beschreibt dabei den Radius eines Kreises, der eine Kurve, in dem Fall die Mittellinie, im betreffenden Punkt tangiert.

Ein zu geringer Krümmungsradius kann zu einer Reduktion Zentrifugalkräfte führen, die üblicherweise proportional zu einem Radius zu einem Drehmittelpunkt sind.

In einer bevorzugten Ausführungsform ist *̅r̅*̅₁̅ ein normierter Richtungsvektor der Einströmrichtung in den Zulauf und *̅r̅*̅₂̅ ist ein normierter Richtungsvektor einer Ausströmrichtung aus dem Separationsabschnitt, und der Separationsabschnitt ist derart ausgestaltet, dass für das Skalarprodukt *a* = *̅r̅*̅₁̅ · *̅r̅*̅₂̅ der Zusammenhang *a* ≤ 0,9 gilt. Vorzugsweise gilt *a* ≤ 0,7, weiter vorzugsweise *a* ≤ 0,2, und besonders bevorzugt *a* ≤ 0.

Dadurch wird ein Mindestwinkel der bogenförmigen Umlenkung in die Hauptkammer beschrieben, um so das Fluid über einen entsprechend ausreichend langen Bogen hinweg der beschriebenen Vor-Separation auszusetzen.

Die Wahl durch Angabe als Skalarprodukt erlaubt eine geometrische saubere Definition des Winkels und schließt auch Fälle nicht aus, in denen der bogenförmige Separationsabschnitt ein oder mehrere "volle" Umdrehungen aufweist.

So beschreibt das Skalarprodukt a den Cosinus des Winkels zwischen den Vektoren *̅r̅*̅₁̅ und *̅r̅*̅₂̅.

In einer bevorzugten Ausführungsform weist der Gehäusekörper im Übergangsbereich zwischen Zulauf und Hauptkammer weiterhin einen divergierenden Abschnitt auf, in dem sich eine Strömungsquerschnittsfläche entlang des Strömungspfads vergrößert, um eine Strömungsgeschwindigkeit des Fluids zu reduzieren, insbesondere noch vor Eintritt in die Hauptkammer.

Auf diese Weise wird der durch die Zentrifugalkräfte angestoßenen Vor-Separation nun zusätzlich Zeit gegeben.

In einem divergierenden Abschnitt fällt dabei eine Änderungsrate des Strömungsquerschnittfläche entlang des Strömungspfads größer aus als in einem konstanten oder in einem konvergierenden Abschnitt, in dem die betreffende Änderungsrate null oder negativ wäre.

Vorzugsweise ist der divergierende Abschnitt derart ausgestaltet, dass sich die Strömungsquerschnittsfläche entlang des Strömungspfads stetig vergrößert.

Auf diese Weise wird ein schlagartiger Anstieg der Strömungsquerschnittsfläche verhindert, was beispielsweise zu Turbulenzen oder Rückströmungseffekten im strömenden Fluid führen kann.

Vorzugsweise grenzt der divergierende Abschnitt bezogen auf die Fließrichtung des Fluids stromabwärts an den Separationsabschnitt an, überschneidet sich zumindest teilweise mit einem stromabwärtsseitigen Endbereich des Separationsabschnitts oder ist vollständig in diesem enthalten.

Ein teilweises Überschneiden oder ein vollständiges Enthalten-sein bedeutet dabei, dass der Strömungsquerschnitt entlang des Bogens bereits divergiert, sodass das Fluid zeitgleich entlang des Bogens umgelenkt und durch den größer werdenden Strömungsquerschnitt verlangsamt wird.

Auf diese Weise wird ein "nahtloser" Übergang zwischen Trennung durch die Zentrifugalkräfte und Verlangsamung des Fluids umgesetzt.

In einer bevorzugten Ausführungsform ist der Gehäusekörper derart ausgestaltet, dass in einer für den Betrieb der Gasabscheidungsvorrichtung vorgesehenen Montageposition der Gasabscheidungsvorrichtung ein Anfangspunkt des divergierenden Abschnitts an einem vertikal tiefsten Punkt des Separationsabschnitts oder stromabwärts von dem vertikal tiefsten Punkt des Separationsabschnitts liegt.

Dadurch erfolgt eine optimale Ausnutzung einer durch die Schwerkraft bewirkten Separation von flüssigen und gasförmigen Bestandteilen, da ab dem tiefsten Punkt die Separationswirkung durch die Schwerkraft durch die sinkende Strömungsgeschwindigkeit verstärkt wird.

So erfolgt in dem nicht divergierenden Bereich mit höherer Strömungsgeschwindigkeit ein Mitreißen der gasförmigen Bestandteile durch die flüssigen Bestandteile, bevor sich ab dem tiefsten Punkt (oder danach) die Strömungsgeschwindigkeit reduziert und so ein schwerkraftbedingtes Aufsteigen der gasförmigen Bestandteile (=schwerkraftbedingtes Absinken der flüssigen Bestandteile) begünstigt wird.

Der Anfangspunkt ist dabei als Punkt zu verstehen, ab dem der divergierende Abschnitt beginnt, also ab dem eine Änderungsrate der Strömungsquerschnittsfläche größer ausfällt, als in einem stromaufwärtsseitigen, an den divergierenden Abschnitt angrenzenden Bereich oder Teilabschnitt des Separationsabschnitts, der vorzugsweise eine konstante Strömungsquerschnittsfläche aufweist.

Eine Vertikale oder vertikal ist dabei stets in Bezug auf das Schwerfeld der Erde zu verstehen. So verläuft die Vertikale parallel zum Schwerfeld der Erde, wobei die relationale Angabe "vertikal oberhalb" sich auf eine Richtung entgegen der Wirkrichtung des Schwerfelds bezieht. In anderen Worten hat ein Körper in einer ersten Position, die vertikal oberhalb einer zweiten Position liegt, ein höheres Schwerpotential als in besagter zweiter Position, die vertikal unterhalb der besagten ersten Position liegt.

In einer bevorzugten Ausführungsform umfasst die Hauptkammer einen Sammelbereich zum Sammeln der gasförmigen Bestandteile des Fluids und einen Weiterleitungsbereich zur Weiterleitung der flüssigen Bestandteile des Fluids zum Ablauf, wobei in einer für den Betrieb der Gasabscheidungsvorrichtung vorgesehenen Montageposition der Gasabscheidungsvorrichtung der Sammelbereich vertikal oberhalb des Weiterleitungsbereichs liegt.

Dadurch wird das leichtere Gas im oberen Teil der Hauptkammer gesammelt und auch ein erneutes Vermischen mit den im Weiterleitungsbereich strömenden flüssigen Bestandteil wird verhindert.

Der Sammelbereich ist hierbei nicht als stets mit Gas gefüllter Bereich zu verstehen. In einem optimalen Zustand ohne gasförmige Bestandteile im Fluid wäre beispielsweise die komplette Hauptkammer mit dem flüssigen Bestandteil gefüllt, so auch der Sammelbereich.

Der Weiterleitungsbereich grenzt insbesondere an den Ablauf an, der wiederum vorzugsweise auf einer dem Sammelbereich gegenüberliegenden Seite aus der Hauptkammer abzweigt.

In einer bevorzugten Ausführungsform ist der Gehäusekörper derart ausgestaltet, dass in Fließrichtung des Fluids der Sammelbereich sich an einen in Bezug auf einen Bogenmittelpunkt des Separationsabschnitts radial inneren Abschnitt des Separationsabschnitts anschließt, und der Weiterleitungsbereich sich an einen in Bezug auf den Bogenmittelpunkt radial äußeren Abschnitt des Separationsabschnitts anschließt.

Auf diese Weise folgt der Sammelbereich dem radial innenliegende ersten Strömungsbereich und der Weiterleitungsbereich dem radial außenliegenden zweiten Strömungsbereich am Ende des Separationsabschnitts.

Dadurch wird ein erneutes Vermischen des Gases im ersten Strömungsbereich mit der Flüssigkeit im zweiten Strömungsbereich verhindert, da das Gas ausgehend vom ersten Strömungsbereich direkt in den Sammelbereich abgeleitet wird.

Der Bogenmittelpunkt kann dabei als geometrischer Mittelpunkt des Bogens verstanden werden, beispielsweise als geometrischer Mittelpunkt der bogenförmigen Mittellinie. Ein solcher Bogenmittelpunkt lässt sich beispielsweise als Schnittpunkt zweier senkrecht zur Mittellinie stehender Normalen bestimmen, die an zwei beliebigen Punkten der Mittellinie angelegt werden können, vorzugsweise aber an den Endpunkten der Mittellinie an den beiden Enden des Separationsabschnitts angelegt werden.

In einer bevorzugten Ausführungsform ist der Gehäusekörper derart ausgestaltet, dass in einer für den Betrieb der Gasabscheidungsvorrichtung vorgesehenen Montageposition der Bogenmittelpunkt des Separationsabschnitts vertikal oberhalb eines Scheitelpunkts des Separationsabschnitts liegt.

Insoweit liegt eine vertikal nach oben oder vertikal schräg nach oben offene Bogenform vor, sodass der radial innenliegende erste Strömungsbereich vertikal oberhalb des radial außenliegenden zweiten Strömungsbereichs liegt und so die Schwerkraft nicht der Vor-Separation durch die Zentrifugalkräfte entgegenwirkt.

Der Scheitelpunkt kann als Mittelpunkt des bogenförmigen Separationsabschnitts bzw. der Mittelinie des Separationsabschnitts verstanden werden, von dem die beiden Endpunkte der Mittelinie den gleichen Abstand aufweisen.

In einer bevorzugten Ausführungsform umfasst die Verschlussvorrichtung einen in der Hauptkammer beweglich gelagerten Schwimmer.

Dies erlaubt eine vergleichsweise einfache Umsetzung der Verschlussvorrichtung bzw. der dieser zugrunde liegenden Mechanik.

Vorzugsweise erfolgt die Lagerung über ein in der Hauptkammer angeordnetes Führungselement, beispielsweise in Form einer Führungsröhre.

In einer bevorzugten Ausführungsform umfasst die Gasabscheidungsvorrichtung weiterhin ein Ablassventil zum Ausleiten von in der Hauptkammer gesammeltem Gas.

Vorzugsweise liegt dieses Ablassventil in einer für den Betrieb der Gasabscheidungsvorrichtung vorgesehenen Montageposition an einer vertikal obersten Stelle der Hauptkammer.

In einer bevorzugten Ausführungsform umfasst die Gasabscheidungsvorrichtung weiterhin eine Kopplungseinheit, die die Verschlussvorrichtung und das Ablassventil miteinander derart koppelt, dass ein Verschließen des Ablaufs durch die Verschlussvorrichtung ein Öffnen des Ablassventils bewirkt und/oder ein Öffnen des Ablaufs durch die Verschlussvorrichtung ein Schließen des Ablassventils bewirkt.

Die Kopplungseinheit kann als starres oder als elastisches Element oder als viskoelastisches Element vorgesehen sein. Die viskoelastische Ausführung gestatte dabei die Umsetzung eines Zeitverzugs zwischen den Bewegungen der Verschlussvorrichtung und dem Ablassventil, sodass ein Schließen des Ablassventils nicht sofort erfolgt, wenn die Verschlussvorrichtung ihre verschließende Endstellung verlässt.

Auf diese Weise wird eine selbstregulierende Gasabscheidungsvorrichtung bereitgestellt, die das gesammelte Gas ableitet, sobald der Ablauf verschlossen wird und diesen auch wieder freigibt, sobald das Gas abgelassen wurde.

Vorzugsweise kann die Kopplungseinheit auch eine Übersetzungsmechanik umfassen, die derart ausgestaltet ist, dass das Ablassventil erst geöffnet wird, sobald die Verschlussvorrichtung in einer verschließenden Endstellung ist und die das Ablassventil erst wieder schließt, sobald die Verschlussvorrichtung in einer freigebenden Endstellung ist. Eine solche Übersetzungsmechanik kann beispielsweise über mechanische Endschalter umgesetzt sein, die erst in den jeweiligen Endstellungen betätigt werden, beispielsweise durch Kontaktherstellung eines Schwimmers mit besagten Endschaltern.

Eine anderweitige, derzeit nicht beanspruchte Erfindung besteht in diesem Zusammenhang in einer Gasabscheidevorrichtung, die eine solche Verschlussvorrichtung umfasst, die über eine solche Kopplungseinheit mit einem Ablassventil verbunden ist.

Eine Gasabscheidungsvorrichtung gemäß dieser nicht beanspruchten Erfindung muss dabei nicht den vorstehend beschriebenen Separationsabschnitt umfassen. Insoweit können alle in dieser Beschreibung genannten Merkmale und speziellen Ausführungen auch auf diese derzeit nicht beanspruchte Variante der Gasabscheidungsvorrichtung übertragen werden, bei der der Separationsabschnitt lediglich optionales Merkmal ist.

In einer bevorzugten Ausführungsform ist H eine entlang des Strömungspfads gemittelte Höhe der Strömungsquerschnitte der Hauptkammer und B ist eine entlang des Strömungspfads gemittelte Breite der Strömungsquerschnitte der Hauptkammer, wobei die Hauptkammer derart ausgestaltet ist, dass für ein Verhältnis von H zu B der Zusammenhang H/B ≤ 0,9 gilt, vorzugsweise H/B ≤ 0,7 oder sogar H/B ≤ 0,5 und besonders bevorzugt H/B ≤ 0,3.

Auf diese Weise kann ein besonders flaches Design umgesetzt werden, dass die Wege des in der Hauptkammer zu sammelnden Gases verkürzen, sodass dieses beispielsweise schnell den Sammelbereich in der Hauptkammer erreicht.

Die Höhe ist hierbei in Bezug auf die für den Betrieb der Gasabscheidungsvorrichtung vorgesehenen Montageposition als vertikale Abmessung zu verstehen. Für den Fall, dass die Strömungsquerschnitte nicht rechteckförmig sind, kann unter einer Höhe und Breite eines einzelnen Strömungsquerschnitts, die Grundlage für die Mittelung entlang des Strömungspfads bilden, eine mittlere Höhe/Breite oder eine maximale Höhe/Breite des einzelnen Strömungsquerschnitts verstanden werden.

Vorzugsweise umfasst das Versorgungssystem weiterhin ein elektrisch betriebenes Heizelement, das zum Heizen des Mediums eingerichtet ist.

Ein derartiges Heizelement kommt beispielsweise im Notbetrieb zum Einsatz für den Fall, dass über den mit dem Kältekreislauf koppelbaren bzw. gekoppelten Wärmeübertrager keine oder nur eine unzureichende Menge an Wärme auf das Medium übertragen wird.

Vorzugsweise ist das Heizelement als Komponente der Gasabscheidungsvorrichtung ausgeführt, sodass eine kombinierte Gasabscheidungs-HeizVorrichtung auf kompaktem Bauraum bereitgestellt werden kann.

Vorzugsweise umfasst das Versorgungssystem ferner auch einen Kältekreislauf, der zumindest einen Verdampfer, einen Verdichter, einen Verflüssiger und eine Expansionsvorrichtung für ein Kältemittel umfasst, wobei der Wärmeübertrager zum Temperieren des Mediums als Verdampfer und/oder Verdichter des Kältekreislaufs fungieren kann.

Weitere Aspekte und deren Vorteile als auch speziellere Ausführungsbeispiele der zuvor genannten Aspekte und Ausführungsformen werden im Folgenden unter Zuhilfenahme der in den beigefügten Figuren gezeigten Zeichnungen beschrieben.

Fig. 1 zeigt zu Erläuterungszwecken ein schematisches Beispiel für eine Gasabscheidungsvorrichtung zum Einsatz im erfindungsgemäßen Versorgungssystem, die allerdings keine Verschlussvorrichtung umfasst.

Fig. 2A und 2B zeigen schematisch ein Ausführungsbeispiel einer Gasabscheidungsvorrichtung zum Einsatz im erfindungsgemäßen Versorgungssystem in zwei unterschiedlichen Zuständen.

Fig. 3 zeigt schematisch ein Ausführungsbeispiel des erfindungsgemäßen Versorgungsystems.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Ausführliche Figurenbeschreibung

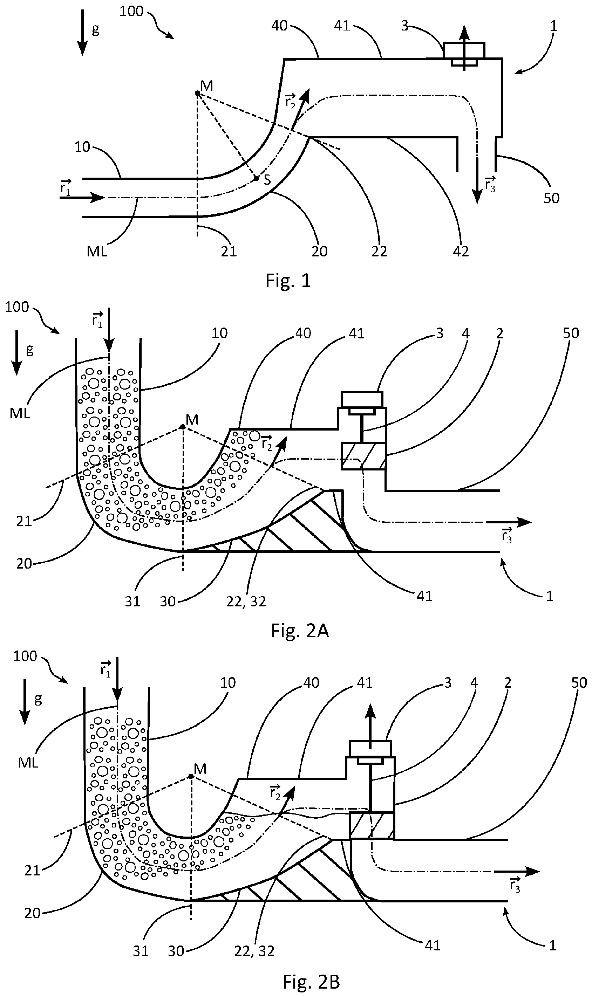

Fig. 1 zeigt zu Erläuterungszwecken ein schematisches Beispiel für eine Gasabscheidungsvorrichtung 100 zum Einsatz im erfindungsgemäßen Versorgungssystem, die allerdings keine Verschlussvorrichtung umfasst.

Die Gasabscheidungsvorrichtung 100 ist zum Abscheiden von Gas aus einem hydraulischen Leitungssystems (hier nicht dargestellt) eingerichtet und umfasst einen Gehäusekörper 1, der einen Zulauf 10, eine Hauptkammer 40 und einen Ablauf 50 umfasst, die Teil eines Strömungspfads für ein den Gehäusekörper 1 durchströmenden Fluids aus dem Leitungssystem sind.

In einem Übergangsbereich zwischen dem Zulauf 10 und der Hauptkammer 40 weist der Gehäusekörper 1 einen bogenförmigen Separationsabschnitt 20 auf, der derart ausgestaltet ist, dass der Strömungspfad ausgehend von einer Einströmrichtung des Zulaufs 10 in einem Bogen in die Hauptkammer 40 eintritt.

Fig. 1 zeigt die Gasabscheidungsvorrichtung 100 in einer bevorzugten Montageposition relativ zum vertikal verlaufenden Schwerefeld g der Erde.

Der Strömungspfad durch die Gasabscheidungsvorrichtung 100 ist exemplarisch durch die Mittellinie ML beschrieben, die entlang einer Fließrichtung des Fluids durch die Flächenmittelpunkte der Strömungsquerschnitte verläuft.

Im Separationsabschnitt 20 werden erfindungsgemäß unter Ausnutzung von auf das strömende Fluid wirkenden Zentrifugalkräften gasförmige und flüssige Bestandeile des Fluids vor einem Eintritt in die Hauptkammer 40 zumindest teilweise voneinander getrennt.

Zumindest aber erfolgt beim Durchströmen des Separationsabschnitts 20 eine Trennung in einen ersten Strömungsbereich und einen zweiten Strömungsbereich, wobei - im Falle von gasförmigen Bestandteilen des in den Zulauf 10 einströmenden Fluids - ein Anteil der gasförmigen Bestandteile im ersten Strömungsbereich größer ausfällt als im zweiten Strömungsbereich.

Der Separationsabschnitt 20 beginnt am Anfangspunkt 21 und erstreckt sich bis zu seinem Endpunkt 22, an dem das in einem Bogen umgeleitete Fluid in die Hauptkammer 40 eintritt.

Im gezeigten Beispiel weist der Separationsabschnitt 20 eine Teilkreisbogenform auf, soll aber nicht auf eine solche beschränkt sein. M beschreibt dabei einen Bogenmittelpunkt und S einen Scheitelpunkt des bogenförmigen Separationsabschnitts 20 beispielsweise in Bezug auf den Teil der Mittellinie ML des Separationsabschnitts (auch Mittellinie des Separationsabschnitts genannt).

Der Bogenmittelpunkt M liegt dabei vorzugsweise oberhalb des Scheitelpunkts S des Separationsabschnitts 20.

Die Vektoren *̅r̅*̅₁̅, *̅r̅*̅₂̅, *̅r̅*̅₃̅ beschreiben normierte Richtungsvektoren der Hauptströmung im Zulauf 10, am Endpunkt 22 des Separationsabschnitts 20 sowie am Ablauf 50.

Vorzugsweise gilt für das Skalarprodukt *a* = *̅r̅*̅₁̅ · *̅r̅*̅₂̅ der Zusammenhang *a* ≤ 0,9.

Bezogen auf den Bogenmittelpunkt M liegt der vorstehend genannte erste Strömungsbereich auf einer radial innenliegenden Seite und der zweite Strömungsbereich auf einer radial außenliegenden Seite des Separationsabschnitts 20. Insoweit werden die gasförmigen Bestandteile im Separationsabschnitt 20 durch die Zentrifugalkräfte in Richtung des Bogenmittelpunkts M gedrückt, was die beschriebene Vor-Separation bewirkt.

In der Hauptkammer 40 erfolgt im Anschluss die Haupt-Separation, bei der die gasförmigen Bestandteile im oberseitigen Sammelbereich 41 gesammelt werden, um dann später über das Ablassventil 3 aus der Hauptkammer 40 abgeführt zu werden.

Die Hauptkammer 40 umfasst weiter einen unterseitigen Weiterleitungsbereich 42, in dem die flüssigen Bestandteile weiter zum Ablauf 50 strömen können.

Der Gehäusekörper 1 ist vorzugsweise derart ausgestaltet ist, dass in Fließrichtung des Fluids der Sammelbereich 41 sich an einen in Bezug auf den Bogenmittelpunkt M des Separationsabschnitts 20 radial inneren Abschnitt des Separationsabschnitts 20 anschließt, und der Weiterleitungsbereich 42 sich an einen in Bezug auf den Bogenmittelpunkt M radial äußeren Abschnitt des Separationsabschnitts 20 anschließt.

Auf diese Weise grenzt der erste Strömungsbereich mit dem Hauptanteil der gasförmigen Bestandteile in Fließrichtung direkt and den vom Sammelbereich umgebenen Innenraum der Hauptkammer 40 an, in dem sich das Gas sammelt.

Fig. 2A und 2B zeigen schematisch ein Ausführungsbeispiel einer Gasabscheidungsvorrichtung 100 zum Einsatz im erfindungsgemäßen Versorgungssystem in zwei unterschiedlichen Zuständen, namentlich in einem geöffneten Zustand in Fig. 2A und in einem geschlossenen Zustand in Fig. 2B.

Die Gasabscheidungsvorrichtung 100 ist zum Abscheiden von Gas aus einem hydraulischen Leitungssystems (hier nicht dargestellt) eingerichtet und umfasst einen Gehäusekörper 1, der einen Zulauf 10, eine Hauptkammer 40 und einen Ablauf 50 umfasst, die Teil eines Strömungspfads für ein den Gehäusekörper 1 durchströmenden Fluids aus dem Leitungssystem sind.

Fig. 2A und 2B zeigen die Gasabscheidungsvorrichtung 100 in einer bevorzugten Montageposition relativ zum vertikal verlaufenden Schwerefeld g der Erde.

In einem Übergangsbereich zwischen dem Zulauf 10 und der Hauptkammer 40 weist der Gehäusekörper 1 einen bogenförmigen Separationsabschnitt 20 auf, der derart ausgestaltet ist, dass der Strömungspfad ausgehend von einer Einströmrichtung des Zulaufs 10 in einem Bogen in die Hauptkammer 40 eintritt.

Der Strömungspfad durch die Gasabscheidungsvorrichtung 100 ist exemplarisch durch die Mittellinie ML beschrieben, die entlang einer Fließrichtung des Fluids durch die Flächenmittelpunkte der Strömungsquerschnitte verläuft.

Im Separationsabschnitt 20 werden erfindungsgemäß unter Ausnutzung von auf das strömende Fluid wirkenden Zentrifugalkräften gasförmige und flüssige Bestandeile des Fluids vor einem Eintritt in die Hauptkammer 40 zumindest teilweise voneinander getrennt. Die Trennung ist exemplarisch durch die Lokalisierung der als Blasen dargestellten gasförmigen Bestandteile angedeutet. Die Blasen wurden zu Veranschaulichungszwecken übergroß dargestellt.

So erfolgt beim Durchströmen des Separationsabschnitts 20 eine Trennung in einen ersten Strömungsbereich und einen zweiten Strömungsbereich, wobei - im Falle von gasförmigen Bestandteilen des in den Zulauf 10 einströmenden Fluids - ein Anteil der gasförmigen Bestandteile im ersten Strömungsbereich größer ausfällt als im zweiten Strömungsbereich.

Der Separationsabschnitt 20 beginnt am Anfangspunkt 21 und erstreckt sich bis zu seinem Endpunkt 22, an dem das in einem Bogen umgeleitete Fluid in die Hauptkammer 40 eintritt.

Im gezeigten Ausführungsbeispiel weist der Separationsabschnitt 20 eine Bogenform mit einem Bogenmittelpunkt M in Bezug auf den Teil der Mittellinie ML des Separationsabschnitts 20 (auch Mittellinie des Separationsabschnitts genannt) auf.

Die Vektoren *̅r̅*̅₁̅*,* *̅r̅*̅₂̅*,* *̅r̅*̅₃̅ beschreiben normierte Richtungsvektoren der Hauptströmung im Zulauf 10, am Endpunkt 22 des Separationsabschnitts 20 sowie am Ablauf 50.

Vorzugsweise gilt für das Skalarprodukt *a* = *̅r̅*̅₁̅ · *̅r̅*̅₂̅ der Zusammenhang *a* ≤ 0,9.

Bezogen auf den Bogenmittelpunkt M liegt der vorstehend genannte erste Strömungsbereich auf einer radial innenliegenden Seite und der zweite Strömungsbereich auf einer radial außenliegenden Seite des Separationsabschnitts 20. Insoweit werden die gasförmigen Bestandteile im Separationsabschnitt 20 durch die Zentrifugalkräfte in Richtung des Bogenmittelpunkts M gedrückt, was die beschriebene Vor-Separation bewirkt.

Der Gehäusekörper 1 weist weiterhin im Übergangsbereich zwischen Zulauf 10 und Hauptkammer 40 vorzugsweise einen divergierenden Abschnitt 30 auf, in dem sich eine Strömungsquerschnittsfläche entlang des Strömungspfads vergrößert, um eine Strömungsgeschwindigkeit des Fluids zu reduzieren.

Im gezeigten Ausführungsbeispiel ist der divergierende Abschnitt 30 dabei vorzugsweise als Teil des Separationsabschnitts 20 ausgeführt und ist eine Teilmenge des stromabwärtsseitigen Endbereichs des Separationsabschnitts 20.

Der divergierende Abschnitt 30 beginnt am Anfangspunkt 31 und erstreckt sich bis zu seinem Endpunkt 32, der im gezeigten Beispiel mit dem Endpunkt 22 des Separationsabschnitts 20 übereinstimmt, was allerdings nicht zwingend ist.

Vorzugsweise ist der Gehäusekörper 1 derart ausgestaltet ist, dass in einer für den Betrieb der Gasabscheidungsvorrichtung 100 vorgesehenen Montageposition der Gasabscheidungsvorrichtung 100 ein Anfangspunkt 31 des divergierenden Abschnitts 30 an einem vertikal tiefsten Punkt des Separationsabschnitts 20 oder stromabwärts von dem vertikal tiefsten Punkt des Separationsabschnitts 20 liegt.

Auf diese Weise erfolgt eine Verlangsamung des Fluids erst ab dem tiefsten Punkt, sodass sich der durch die Schwerkraft bedingte Separationseffekt verstärkt.

In der Hauptkammer 40 erfolgt im Anschluss an den Separationsabschnitt 20 die Haupt-Separation, bei der die gasförmigen Bestandteile im oberseitigen Sammelbereich 41 gesammelt werden, um dann später über das Ablassventil 3 aus der Hauptkammer 40 abgeführt zu werden.

Die Hauptkammer 40 umfasst weiter einen unterseitigen Weiterleitungsbereich 42, in dem die flüssigen Bestandteile weiter zum Ablauf 50 strömen können.

Der Gehäusekörper 1 ist vorzugsweise derart ausgestaltet, dass in Fließrichtung des Fluids der Sammelbereich 41 sich an einen in Bezug auf den Bogenmittelpunkt M des Separationsabschnitts 20 radial inneren Abschnitt des Separationsabschnitts 20 anschließt, und der Weiterleitungsbereich 42 sich an einen in Bezug auf den Bogenmittelpunkt M radial äußeren Abschnitt des Separationsabschnitts 20 anschließt.

Auf diese Weise grenzt der erste Strömungsbereich mit dem Hauptanteil der gasförmigen Bestandteile in Fließrichtung direkt and den vom Sammelbereich umgebenen Innenraum der Hauptkammer 40 an, in dem sich das Gas sammelt.

Fig. 2A zeigt einen Zustand mit geöffnetem Ablauf 50, bei dem sich die Verschlussvorrichtung 2 in einer ersten Endstellung befindet.

Erhöht sich die Gasmenge im Sammelbereich 41, so verschiebt sich die exemplarisch als Schwimmer ausgeführte Verschlussvorrichtung 2 in eine zweite Endstellung und verschließt damit den Ablauf 50 für das Fluid (siehe Fig. 2B).

Die Gasabscheidungsvorrichtung umfasst vorzugsweise weiter eine Kopplungseinheit 4, die die Verschlussvorrichtung 2 und das Ablassventil 3 miteinander derart koppelt, dass ein Verschließen des Ablaufs 50 durch die Verschlussvorrichtung 2 ein Öffnen des Ablassventils 3 und/oder ein Öffnen des Ablaufs 50 durch die Verschlussvorrichtung 2 ein Schließen des Ablassventils 3 bewirkt.

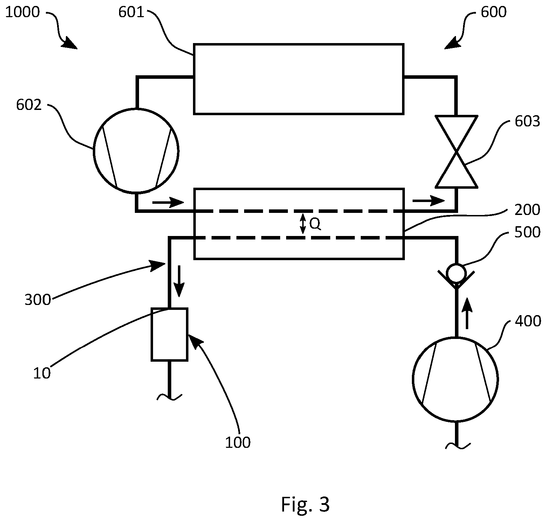

Fig. 3 zeigt schematisch ein Ausführungsbeispiel des erfindungsgemäßen Versorgungsystems 1000 zur Versorgung von Verbrauchern mit einem temperierten Medium.

Das Versorgungssystem umfasst ein Leitungssystem 300 zum Transport des Mediums, einen Wärmeübertrager 200, der eingerichtet ist, das im Leitungssystem 300 strömende Medium zu temperieren (durch einen Wärmefluss Q), und eine Gasabscheidungsvorrichtung 100, beispielsweise gemäß des Ausführungsbeispiels aus den Fig. 2A und 2B.

Strömungsrichtungen des Mediums und eines Kältemittels eines Kältekreislaufs 600 sind über Pfeile in Fig. 3 angedeutet.

Die Gasabscheidungsvorrichtung 100 ist vorzugsweise über deren Zulauf 10 vorzugsweise an einen Ablauf des Wärmeübertragers 200 angeschlossen.

Weiterhin umfasst das Versorgungssystem 1000 vorzugsweise eine mit dem Leitungssystem 300 verbundene Umwälzpumpe 400 sowie ein dem Wärmeübertrager 200 vorgeschaltetes Rückschlagventil 500.

Das Versorgungssystem 1000 umfasst vorzugsweise einen Kältekreislauf 600, von dem wiederum auch der Wärmeübertrager 200 zum Temperieren des Mediums Bestandteil ist.

Besagter Wärmeübertrager 200 ist dabei vorzugsweise Verflüssiger des Kältekreislaufs 600, um so das Medium im Leitungssystem 300 aufzuheizen. Der Wärmeübertrager 200 kann grundsätzlich auch als Verflüssiger im Kältekreislauf eingesetzt werden, um das Medium zu kühlen, wobei diese Konfiguration nicht in Fig. 3 gezeigt ist.

Der Kältekreislauf 600 umfasst vorzugsweise einen Verdampfer 601 zum Verdampfen eines Kältemittels im Kältekreislauf 600, einen sich daran anschließenden Verdichter 602, den besagten Wärmeübertrager 200 als Verflüssiger und eine sich daran anschließende Expansionsvorrichtung 603, beispielsweise in Form eines Entspannungsventils.

Die Gasabscheidungsvorrichtung 100 verhindert dabei insbesondere ein Ausbreiten von über den Wärmeübertrager 200 aus dem Kältekreislauf 600 in das Leitungssystem 300 ausgetretenem gasförmigem Kältemittel.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Liste der Bezugszeichen

- 1: Gehäusekörper
- 2: Verschlussvorrichtung
- 3: Ablassventil
- 4: Kopplungseinheit
- 10: Zulauf
- 20: Separationsabschnitt
- 21: Anfangspunkt Separationsabschnitt
- 22: Endpunkt Separationsabschnitt
- 30: divergierender Abschnitt
- 31: Anfangspunkt divergierender Abschnitt
- 32: Endpunkt divergierender Abschnitt
- 40: Hauptkammer
- 41: Sammelbereich
- 42: Weiterleitungsbereich
- 50: Ablauf
- 100: Gasabscheidungsvorrichtung
- 200: Wärmeübertrager
- 300: Leitungssystem
- 400: Umwälzpumpe
- 500: Rückschlagventil
- 600: Kältekreislauf
- 601: Verdampfer
- 602: Verdichter
- 603: Expansionsvorrichtung
- 1000: Versorgungssystem

## Patentansprüche

1. Versorgungssystem (1000) zur Versorgung eines oder mehrerer Verbraucher mit einem temperierten Medium, zumindest umfassend:
- ein hydraulisches Leitungssystem (300) zum Transport des Mediums;
- einen Wärmeübertrager (200), der eingerichtet ist, das im Leitungssystem (300) strömende Medium zu temperieren; und
- eine Gasabscheidungsvorrichtung (100), die zum Abscheiden von Gas aus dem Leitungssystem (300) eingerichtet ist,
wobei die Gasabscheidungsvorrichtung (100) eine Gehäusekörper (1) umfasst, der wiederum einen Zulauf (10), eine Hauptkammer (40) und einen Ablauf (50) umfasst, die Teil eines Strömungspfads für ein den Gehäusekörper (1) durchströmenden Fluids aus dem Leitungssystem (300) sind,
der Gehäusekörper (1) in einem Übergangsbereich zwischen dem Zulauf (10) und der Hauptkammer (40) einen Separationsabschnitt (20) aufweist, der bogenförmig ausgestaltet ist, derart, dass der Strömungspfad ausgehend von einer Einströmrichtung des Zulaufs (10) in einem Bogen in die Hauptkammer (40) eintritt, um unter Ausnutzung von auf das strömende Fluid wirkenden Zentrifugalkräften gasförmige und flüssige Bestandeile des Fluids vor einem Eintritt in die Hauptkammer (40) zumindest teilweise voneinander zu trennen,
**dadurch gekennzeichnet, dass**
die Gasabscheidungsvorrichtung (100) weiterhin eine innerhalb des Gehäusekörpers (1) gelagerte Verschlussvorrichtung (2) umfasst, die eingerichtet ist, in Abhängigkeit einer in der Hauptkammer (40) gesammelten Gasmenge den Ablauf (50) zu verschließen und so eine Strömung des Fluids entlang des Strömungspfads zu unterbinden.

2. Versorgungssystem (1000) nach Anspruch 1, wobei
der Wärmeübertrager (200) Teil eines Kältekreislaufs (600) ist, in dem ein Kältemittel führbar ist,
wobei der Zulauf (10) der Gasabscheidungsvorrichtung (100) vorzugsweise an einen Ablauf des Wärmeübertragers (200) angeschlossen ist.

3. Versorgungssystem (1000) nach einem der Ansprüche 1 oder 2, wobei
der Separationsabschnitt (20) derart ausgestaltet ist, dass eine Mittellinie des Separationsabschnitts (20), die entlang einer Fließrichtung des Fluids durch Flächenmittelpunkte von Strömungsquerschnitten des Separationsabschnitts (20) verläuft, einen stetigen Krümmungsverlauf aufweist.

4. Versorgungssystem (1000) nach Anspruch 3, wobei
der Separationsabschnitt (20) derart ausgestaltet ist, dass ein Maximum des Krümmungsverlaufs der Mittellinie zwischen (1/60) mm⁻¹ und (1/20) mm⁻¹ liegt.

5. Versorgungssystem (1000) nach einem der Ansprüche 1 bis 4, wobei
*̅r̅*̅₁̅ ein normierter Richtungsvektor der Einströmrichtung in den Zulauf (10) ist und *̅r̅*̅₂̅ ein normierter Richtungsvektor einer Ausströmrichtung aus dem Separationsabschnitt (20) ist, und
der Separationsabschnitt (20) derart ausgestaltet ist, dass für das Skalarprodukt *a* = *̅r̅*̅₁̅ · *̅r̅*̅₂̅ der Zusammenhang *a* ≤ 0,9 gilt.

6. Versorgungssystem (1000) nach einem der Ansprüche 1 bis 5, wobei
der Gehäusekörper (1) im Übergangsbereich zwischen Zulauf (10) und Hauptkammer (40) weiterhin einen divergierenden Abschnitt (30) aufweist, in dem sich eine Strömungsquerschnittsfläche entlang des Strömungspfads vergrößert, um eine Strömungsgeschwindigkeit des Fluids zu reduzieren,
wobei der divergierende Abschnitt bezogen auf die Fließrichtung des Fluids vorzugsweise stromabwärts an den Separationsabschnitt (20) angrenzt oder sich mit einem stromabwärtsseitigen Endbereich des Separationsabschnitts (20) zumindest teilweise überschneidet oder vollständig in diesem enthalten ist.

7. Versorgungssystem (1000) nach Anspruch 6, wobei
der Gehäusekörper (1) derart ausgestaltet ist, dass in einer für den Betrieb der Gasabscheidungsvorrichtung (100) vorgesehenen Montageposition der Gasabscheidungsvorrichtung (100) ein Anfangspunkt (31) des divergierenden Abschnitts (30) an einem vertikal tiefsten Punkt des Separationsabschnitts (20) oder stromabwärts von dem vertikal tiefsten Punkt des Separationsabschnitts (20) liegt.

8. Versorgungssystem (1000) nach einem der Ansprüche 1 bis 7, wobei
die Hauptkammer (40) einen Sammelbereich (41) zum Sammeln der gasförmigen Bestandteile des Fluids und einen Weiterleitungsbereich (42) zur Weiterleitung der flüssigen Bestandteile des Fluids zum Ablauf (50) umfasst,
wobei in einer für den Betrieb der Gasabscheidungsvorrichtung (100) vorgesehenen Montageposition der Gasabscheidungsvorrichtung (100) der Sammelbereich (41) vertikal oberhalb des Weiterleitungsbereichs (42) liegt.

9. Versorgungssystem (1000) nach Anspruch 8, wobei
der Gehäusekörper (1) derart ausgestaltet ist, dass in Fließrichtung des Fluids der Sammelbereich (41) sich an einen in Bezug auf einen Bogenmittelpunkt des Separationsabschnitts (20) radial inneren Abschnitt des Separationsabschnitts (20) anschließt, und der Weiterleitungsbereich (42) sich an einen in Bezug auf den Bogenmittelpunkt radial äußeren Abschnitt des Separationsabschnitts (20) anschließt.

10. Gasabscheidungsvorrichtung (100) nach einem der Ansprüche 1 bis 9, wobei
der Gehäusekörper (1) derart ausgestaltet ist, dass in einer für den Betrieb der Gasabscheidungsvorrichtung (100) vorgesehenen Montageposition der Bogenmittelpunkt des Separationsabschnitts (20) vertikal oberhalb eines Scheitelpunkts des Separationsabschnitts (20) liegt.

11. Versorgungssystem (1000) nach einem der Ansprüche 1 bis 10, wobei
die Verschlussvorrichtung (2) einen in der Hautkammer beweglich gelagerten Schwimmer umfasst.

12. Versorgungssystem (1000) nach einem der Ansprüche 1 bis 11, wobei
die Gasabscheidungsvorrichtung (100) weiterhin ein Ablassventil (3) zum Ausleiten von in der Hauptkammer (40) gesammelten Gas umfasst.

13. Versorgungssystem (1000) nach einem der Ansprüche 1 oder 11 und nach Anspruch 12, wobei
die Gasabscheidungsvorrichtung (100) weiterhin eine Kopplungseinheit (4) umfasst, die die Verschlussvorrichtung und das Ablassventil (3) miteinander derart koppelt, dass ein Verschließen des Ablaufs (50) durch die Verschlussvorrichtung (2) ein Öffnen des Ablassventils (3) und/oder ein Öffnen des Ablaufs (50) durch die Verschlussvorrichtung (2) ein Schließen des Ablassventils (3) bewirkt.

14. Versorgungssystem (1000) nach einem der Ansprüche 1 bis 13, wobei
H eine entlang des Strömungspfads gemittelte Höhe der Strömungsquerschnitte der Hauptkammer (40) und B eine entlang des Strömungspfads gemittelte Breite der Strömungsquerschnitte der Hauptkammer (40) ist,
und die Hauptkammer (40) derart ausgestaltet ist, dass für ein Verhältnis von H zu B der Zusammenhang H/B ≤ 0,9, vorzugsweise H/B ≤ 0,7, gilt.

15. Versorgungssystem (1000) nach einem der Ansprüche 1 bis 14, wobei
das Versorgungssystem (1000) ein Klimatisierungssystem oder ein Brauchwassersystem ist.

## Claims

1. Supply system (1000) for supplying one or more consumers with a tempered medium, at least comprising:
- a hydraulic piping system (300) for transporting the medium;
- a heat exchanger (200) which is configured to temper the medium flowing in the piping system (300); and
- a gas separation device (100) which is configured to separate gas from the piping system (300),
wherein the gas separation device (100) comprises a housing body (1) which in turn comprises an inlet (10), a main chamber (40) and an outlet (50) which are part of a flow path for a fluid from the piping system (300) flowing through the housing body (1),
the housing body (1) has, in a transition region between the inlet (10) and the main chamber (40), a separation section (20) which is of arcuate configuration in such a way that, proceeding from an inflow direction of the inlet (10), the flow path enters the main chamber (40) in an arc in order to separate gaseous and liquid constituents of the fluid from one another at least partially before entry into the main chamber (40), utilizing centrifugal forces acting on the flowing fluid,
**characterized in that**
the gas separation device (100) furthermore comprises a closure device (2) which is mounted within the housing body (1) and which is configured to close the outlet (50) depending on a gas quantity collected in the main chamber (40) and thus to prevent a flow of the fluid along the flow path.

2. Supply system (1000) according to Claim 1, wherein
the heat exchanger (200) is part of a refrigeration circuit (600) in which a refrigerant can be conducted,
wherein the inlet (10) of the gas separation device (100) is preferably connected to an outlet of the heat exchanger (200).

3. Supply system (1000) according to either of Claims 1 and 2, wherein
the separation section (20) is configured in such a way that a centre line of the separation section (20), which centre line runs along a flow direction of the fluid through surface centre points of flow cross sections of the separation section (20), has a continuous curvature profile.

4. Supply system (1000) according to Claim 3, wherein
the separation section (20) is configured in such a way that a maximum of the curvature profile of the centre line lies between (1/60) mm⁻¹ and (1/20) mm⁻¹ .

5. Supply system (1000) according to one of Claims 1 to 4, wherein
*̅r̅*̅₁̅ is a normalized direction vector of the inflow direction into the inlet (10) and *̅r̅*̅₂̅ is a normalized direction vector of an outflow direction from the separation section (20), and
the separation section (20) is configured in such a way that the relationship *a* ≤ 0,9 applies to the scalar product *a* = *̅r̅*̅₁̅ · *̅r̅*̅₂̅.

6. Supply system (1000) according to one of Claims 1 to 5, wherein
the housing body (1) furthermore has, in the transition region between inlet (10) and main chamber (40), a diverging section (30) in which a flow cross-sectional area increases along the flow path in order to reduce a flow velocity of the fluid,
wherein the diverging section preferably adjoins the separation section (20) downstream with respect to the flow direction of the fluid or at least partially overlaps a downstream-side end region of the separation section (20) or is contained completely therein.

7. Supply system (1000) according to Claim 6, wherein
the housing body (1) is configured in such a way that, in an assembly position of the gas separation device (100) provided for operation of the gas separation device (100), a starting point (31) of the diverging section (30) lies at a vertically lowest point of the separation section (20) or downstream from the vertically lowest point of the separation section (20).

8. Supply system (1000) according to one of Claims 1 to 7, wherein
the main chamber (40) comprises a collecting region (41) for collecting the gaseous constituents of the fluid and a forwarding region (42) for forwarding the liquid constituents of the fluid to the outlet (50),
wherein, in an assembly position of the gas separation device (100) provided for operation of the gas separation device (100), the collecting region (41) lies vertically above the forwarding region (42).

9. Supply system (1000) according to Claim 8, wherein
the housing body (1) is configured in such a way that, in the flow direction of the fluid, the collecting region (41) adjoins a radially inner section of the separation section (20) with respect to an arc centre point of the separation section (20), and the forwarding region (42) adjoins a radially outer section of the separation section (20) with respect to the arc centre point.

10. Gas separation device (100) according to one of Claims 1 to 9, wherein
the housing body (1) is configured in such a way that, in an assembly position provided for operation of the gas separation device (100), the arc centre point of the separation section (20) lies vertically above an apex point of the separation section (20).

11. Supply system (1000) according to one of Claims 1 to 10, wherein
the closure device (2) comprises a float mounted movably in the main chamber.

12. Supply system (1000) according to one of Claims 1 to 11, wherein
the gas separation device (100) furthermore comprises a discharge valve (3) for discharging gas collected in the main chamber (40).

13. Supply system (1000) according to one of Claims 1 or 11 and according to Claim 12, wherein
the gas separation device (100) furthermore comprises a coupling unit (4) which couples the closure device and the discharge valve (3) to one another in such a way that closure of the outlet (50) by the closure device (2) brings about opening of the discharge valve (3) and/or opening of the outlet (50) by the closure device (2) brings about closing of the discharge valve (3).

14. Supply system (1000) according to one of Claims 1 to 13, wherein
H is a height, averaged along the flow path, of the flow cross sections of the main chamber (40) and B is a width, averaged along the flow path, of the flow cross sections of the main chamber (40),
and the main chamber (40) is configured in such a way that the relationship H/B ≤ 0.9, preferably H/B ≤ 0.7, applies to a ratio of H to B.

15. Supply system (1000) according to one of Claims 1 to 14, wherein
the supply system (1000) is an air-conditioning system or a service water system.

## Revendications

1. Système d'alimentation (1000) pour l'alimentation d'un ou de plusieurs consommateurs avec un fluide tempéré, comprenant au moins :
- un système de conduites hydrauliques (300) pour le transport du fluide ;
- un échangeur de chaleur (200) qui est conçu pour tempérer le fluide s'écoulant dans le système de conduites (300) ; et
- un dispositif de séparation de gaz (100) qui est conçu pour séparer du gaz du système de conduites (300),
le dispositif de séparation de gaz (100) comprenant corps de boîtier (1) qui comprend à son tour une entrée (10), une chambre principale (40) et une sortie (50) qui font partie d'un chemin d'écoulement pour un fluide s'écoulant à travers le corps de boîtier (1) provenant du système de conduites (300),
le corps de boîtier (1) présentant, dans une zone de transition entre l'entrée (10) et la chambre principale (40), une section de séparation (20) qui est configurée en forme d'arc de telle sorte que le chemin d'écoulement entre dans la chambre principale (40) en formant un arc à partir d'une direction d'entrée de l'entrée (10) afin de séparer au moins partiellement les unes des autres des constituants gazeux et liquides du fluide avant une entrée dans la chambre principale (40) en utilisant des forces centrifuges agissant sur le fluide s'écoulant,
**caractérisé en ce que**
le dispositif de séparation de gaz (100) comprend en outre un dispositif de fermeture (2) monté à l'intérieur du corps de boîtier (1) qui est conçu pour fermer la sortie (50) en fonction d'une quantité de gaz collectée dans la chambre principale (40) et pour empêcher ainsi un écoulement du fluide le long du chemin d'écoulement.

2. Système d'alimentation (1000) selon la revendication 1,
l'échangeur de chaleur (200) faisant partie d'un circuit de réfrigération (600) dans lequel un réfrigérant peut être guidé,
l'entrée (10) du dispositif de séparation de gaz (100) étant de préférence raccordée à une sortie de l'échangeur de chaleur (200).

3. Système d'alimentation (1000) selon l'une quelconque des revendications 1 ou 2,
la section de séparation (20) étant configurée de telle sorte qu'une ligne médiane de la section de séparation (20) qui s'étend le long d'une direction d'écoulement du fluide à travers des centres de surface de sections transversales d'écoulement de la section de séparation (20) présente une courbe de courbure constante.

4. Système d'alimentation (1000) selon la revendication 3,
la section de séparation (20) étant configurée de telle sorte qu'un maximum de la courbe de courbure de la ligne médiane se situe entre (1/60) mm⁻¹ et (1/20) mm⁻¹.

5. Système d'alimentation (1000) selon l'une quelconque des revendications 1 à 4,
*̅r̅*̅₁̅ étant un vecteur de direction normalisé de la direction d'entrée dans l'entrée (10) et *̅r̅*̅₂̅ étant un vecteur de direction normalisé d'une direction de sortie hors de la section de séparation (20), et
la section de séparation (20) étant configurée de telle sorte que la relation *a* ≤ 0,9 s'applique au produit scalaire *a* = *̅r̅*̅₁̅ · *̅r̅*̅₂̅.

6. Système d'alimentation (1000) selon l'une quelconque des revendications 1 à 5,
le corps de boîtier (1) présentant en outre, dans la zone de transition entre l'entrée (10) et la chambre principale (40), une section divergente (30) dans laquelle une surface de section transversale d'écoulement augmente le long du chemin d'écoulement afin de réduire une vitesse d'écoulement du fluide,
la section divergente étant de préférence adjacente à la section de séparation (20) en aval par rapport à la direction d'écoulement du fluide ou se chevauchant au moins partiellement avec une zone d'extrémité côté aval de la section de séparation (20) ou étant contenue complètement dans celle-ci.

7. Système d'alimentation (1000) selon la revendication 6,
le corps de boîtier (1) étant configuré de telle sorte que, dans une position de montage du dispositif de séparation de gaz (100) prévue pour le fonctionnement du dispositif de séparation de gaz (100), un point de départ (31) de la section divergente (30) se situe au niveau d'un point verticalement le plus bas de la section de séparation (20) ou en aval du point verticalement le plus bas de la section de séparation (20).

8. Système d'alimentation (1000) selon l'une quelconque des revendications 1 à 7,
la chambre principale (40) comprenant une zone de collecte (41) pour collecter les constituants gazeux du fluide et une zone de transfert (42) pour transférer les constituants liquides du fluide vers la sortie (50),
la zone de collecte (41) se situant verticalement au-dessus de la zone de transfert (42) dans une position de montage du dispositif de séparation de gaz (100) prévue pour le fonctionnement du dispositif de séparation de gaz (100).

9. Système d'alimentation (1000) selon la revendication 8,
le corps de boîtier (1) étant configuré de telle sorte que, dans la direction d'écoulement du fluide, la zone de collecte (41) se raccorde à une section radialement intérieure de la section de séparation (20) par rapport à un centre d'arc de la section de séparation (20), et la zone de transfert (42) se raccorde à une section radialement extérieure de la section de séparation (20) par rapport au centre d'arc.

10. Dispositif de séparation de gaz (100) selon l'une quelconque des revendications 1 à 9,
le corps de boîtier (1) étant configuré de telle sorte que, dans une position de montage prévue pour le fonctionnement du dispositif de séparation de gaz (100), le centre d'arc de la section de séparation (20) se situe verticalement au-dessus d'un sommet de la section de séparation (20).

11. Système d'alimentation (1000) selon l'une quelconque des revendications 1 à 10,
le dispositif de fermeture (2) comprenant un flotteur monté de manière mobile dans la chambre principale.

12. Système d'alimentation (1000) selon l'une quelconque des revendications 1 à 11,
le dispositif de séparation de gaz (100) comprenant en outre une soupape d'évacuation (3) pour évacuer du gaz collecté dans la chambre principale (40).

13. Système d'alimentation (1000) selon l'une quelconque des revendications 1 ou 11 et selon la revendication 12,
le dispositif de séparation de gaz (100) comprenant en outre une unité de couplage (4) qui couple le dispositif de fermeture et la soupape d'évacuation (3) l'un à l'autre de telle sorte qu'une fermeture de la sortie (50) par le dispositif de fermeture (2) provoque une ouverture de la soupape d'évacuation (3) et/ou une ouverture de la sortie (50) par le dispositif de fermeture (2) provoque une fermeture de la soupape d'évacuation (3).

14. Système d'alimentation (1000) selon l'une quelconque des revendications 1 à 13,
H étant une hauteur moyenne le long du chemin d'écoulement des sections transversales d'écoulement de la chambre principale (40) et B étant une largeur moyenne le long du chemin d'écoulement des sections transversales d'écoulement de la chambre principale (40),
et la chambre principale (40) étant configurée de telle sorte que la relation H/B ≤ 0,9, de préférence H/B ≤ 0,7, s'applique à un rapport de H à B.

15. Système d'alimentation (1000) selon l'une quelconque des revendications 1 à 14,
le système d'alimentation (1000) étant un système de climatisation ou un système d'eau sanitaire.
